# EUROPEAN PATENT SPECIFICATION

(11) **EP 3 956 408 B1**
(45) Date of publication and mention of the grant of the patent: **14.10.2026**
(21) Application number: 20719184.2
(22) Date of filing: 15.04.2020
(51) Int. Cl.: C09D 11/03, C09D 11/104, C09D 7/45

(54) **AMINE DISPERSANTS**
AMINHALTIGE DISPERGIERMITTEL
DISPERSANT AMINÉ

(30) Priority: 18.04.2019 EP 19170000
(43) Date of publication of application: 23.02.2022
(73) Proprietor: BASF SE, 67056 Ludwigshafen am Rhein (DE)
(72) Inventor: KOU, Huiguang, 67056 Ludwigshafen (DE); ONCLIN, Steffen, 67056 Ludwigshafen (DE); GERNANDT, Andreas, 67056 Ludwigshafen (DE); WILLENBACHER, Johannes Hermann, 67056 Ludwigshafen (DE); AUSCHRA, Clemens, 67056 Ludwigshafen (DE)
(74) Representative: BASF IP Association
(86) International application number: PCT/EP2020/060569
(87) International publication number: WO 2020/212410

(56) References cited:
- WO-A1-93/02131
- WO-A1-99/55763
- US-A- 3 996 059
- US-A- 5 753 022
- US-A1- 2014 114 019

## Description

### Field of the invention

The presently claimed invention relates to a dispersant containing oxyalkylenecarbonyl units and a process for its preparation. The presently claimed invention is also directed to the use of the dispersant in a coating composition or an ink composition.

### Background of the invention

Dispersions containing fine particulate solid materials such as pigments are widely used, e.g. as coating compositions, as printing inks, for preparing paint systems such as automotive, industrial and decorative paints, for coloring materials such as plastics and glasses and for manufacturing cosmetic compositions.

A dispersant is an important component of dispersions containing fine particulate solid materials. The preparation of dispersions involves incorporation of the solid materials such as pigments into the vehicle by replacing the pigment-air interfaces with pigment-vehicle interfaces. A dispersant facilitates dispersion of pigments in the vehicle as a result of the surface activity at the pigment-vehicle interface. Even though certain organic vehicles have good particle wetting properties, dispersants are used to ensure thorough dispersion of the fine particulate solid materials throughout the vehicle. Dispersants also have a bearing on various process parameters such as dispersion time and energy requirement. An ideal dispersion consists of a homogenous and stable suspension of solid materials after size reduction or milling of any aggregates and agglomerates.

A dispersant improves various dispersion properties such as mill base viscosity and rheology behavior. The enhanced rheology behaviour is characterized by suitable viscosities over a wide range of shear rates. An improvement in viscosity and rheology behaviour leads to improved application properties such as better flowability and levelling, less spattering and sagging of the coating.

The dispersant is also a determining factor of the aesthetics and physical properties of a coating. A dispersant can act as a flow control agent and bring about improved spreading of the composition over the surface of the substrate and improve the flow of the polymer film which forms in the course of curing, resulting in a smooth surface. As a consequence, the dispersant reduces the formation of defects, known as craters, which are caused by impurities acting from the outside or by impurities on the surface of the substrate.

US 3 996 059 A discloses a dispersing agent comprising a polyester chain and an amino group or quaternary ammonium salt. The polyester chain is derived from a hydroxycarboxylic acid having 8 to 20 carbon atoms. WO 93/02131 A1 discloses a dispersing agent comprising the reaction product of a polyhydric alcohol component with a polycarboxylic acid component. US 2014/114019A1 discloses a composition comprising quaternized polyester salt obtainable by reaction of a polyester containing a tertiary amino group and a quaternizing agent. The quaternizing agent is a hydrocarbyl epoxide with an acid. US 5 753 022 A discloses polyesteramine or polyesterammoniunm salts obtained by reaction of an amine with a polyesteramine. WO 99/55763 A1 discloses amine dispersants containing amine/imine groups and poly(oxyalkylenecarbonyl) chains. The poly(oxyalkylenecarbonyl) chain is obtained by reacting hydroxycarboxylic acids or lactones and a residue of an ethylenically unsaturated group. The ethylenically unsaturated group has a side chain with C1-4 alkyl.

In view of the wide application of dispersions containing fine particulate solid materials and the important role played by the dispersants in their preparation, stability and properties, there is a growing need for improved dispersants that are capable of assisting the preparation of dispersions having the desired characteristics.

Accordingly, it is an object of the presently claimed invention to provide a dispersant that provides a stable dispersion containing fine particulate solid materials having improved dispersion properties such as low viscosity and provides a surface coating with a high gloss and low crater number.

### Summary of the invention

Surprisingly, it was found that dispersants containing oxyalkylenecarbonyl units and nitrogen containing groups have beneficial properties and that dispersions containing fine particulate solid materials comprising the dispersant containing oxyalkylenecarbonyl units and nitrogen containing groups are stable and have improved properties such as low viscosity and provide a surface coating with a high gloss and low crater number.

Accordingly, the main aspect of the presently claimed invention is directed to a dispersant of formula (I),

T-(A)ₘ-L-Z formula (I),

wherein T is hydrogen or R'-C(=O)-,
R¹ is a substituted or unsubstituted, linear or branched C₁-C₂₄ alkyl;
A is, identical or different, an oxyalkylenecarbonyl unit of formula -O-R²-C(=O)-,
R² is -(CH₂)₅-, -(CH₂)₄- or -(CH₂)₃-;
m is an integer in the range from 3 to 50;
L represents a group selected from the group consisting of -O- and -NH-;
Z is a nitrogen containing group selected from the group consisting of Z₁, Z₂, and Z₃;
wherein Z₁ is R¹¹R¹²N-R¹³-, Z₂ is Y-R¹⁴-, and Z₃ is Y-CH₂-CH₂-C(=O)-OR¹⁴-
R¹¹ and R¹² are independently selected from hydrogen and substituted or unsubstituted, linear or branched C₁-C₁₂ alkyl which can be the same or different, or R¹¹ and R¹² together with the nitrogen to which they are attached form a 3- to 12-membered ring comprising 0 to 3 heteroatoms,
R¹³ is a substituted or unsubstituted, linear or branched C₁-C₁₂ alkylene;
Y is a 5- or 6- membered N-containing heterocycle which comprises 1 or 2 nitrogen atoms and which can additionally comprise an oxygen atom,
R¹⁴ is a substituted or unsubstituted, linear or branched C₁-C₁₂ alkylene;
or Z is a quaternary ammonium salt derivable from the nitrogen containing group selected from the group consisting of Z₁, Z₂, and Z₃; wherein the quaternary nitrogen is attached to R¹⁵ and an anion X-,
R¹⁵ is selected from the group consisting of hydrogen, a substituted or unsubstituted, linear or branched C₁-C₂₄ alkyl, a substituted or unsubstituted C₄-C₁₀ cycloalkyl, a substituted or unsubstituted C₆-C₁₈ aryl, and substituted or unsubstituted, branched or unbranched C₇-C₁₈ arylalkyl; wherein the C₁-C₂₄ alkyl is optionally interrupted by -O-; and
X- is selected from the group consisting of Cl, Br, I, acetate and benzoate;
wherein Z is a nitrogen containing group selected from the group consisting of Z₁, Z₂, and Z₃ and the dispersant has an amine number from in the range of 30 to 100 mg KOH/g, as determined according to DIN 53176:2002-11; and
wherein Z is a quaternary ammonium salt and the dispersant has an amine number in the range of 2 to 12 mg KOH/g, as determined according to DIN 53176:2002-11.

In another aspect, the presently claimed invention provides a process for preparing a dispersant of formula (I). The process comprises the following steps.
i. A compound of formula R¹¹R¹²N-R¹³-NH₂ is mixed with a lactone monomer of formula (II), 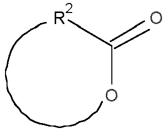 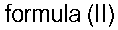 or a polyester homopolymer or copolymer obtainable from the lactone monomer of formula (II) to obtain a reaction mixture, wherein R², R¹¹, R¹² and R¹³ are as defined above.
ii. The reaction mixture as obtained in step i. is heated at a temperature in the range of 70 to 150 °C to obtain a homogeneous mixture.
iii. The homogeneous mixture as obtained in step ii. is heated at a temperature in the range of 100 to 300 °C to obtain the dispersant of formula (I).

In yet another aspect, the presently claimed invention provides the use of the dispersant of formula (I) as a component of a coating composition or an ink composition.

### Detailed Description

Before the present compositions and formulations of the presently claimed invention are described, it is to be understood that this invention is not limited to particular compositions and formulations described, since such compositions and formulation may, of course, vary. It is also to be understood that the terminology used herein is not intended to be limiting, since the scope of the presently claimed invention will be limited only by the appended claims.

If hereinafter a group is defined to comprise at least a certain number of embodiments, this is meant to also encompass a group which preferably consists of these embodiments only. Furthermore, the terms 'first', 'second', 'third' or 'a', 'b', 'c', etc. and the like in the description and in the claims, are used for distinguishing between similar elements and not necessarily for describing a sequential or chronological order. It is to be understood that the terms so used are interchangeable under appropriate circumstances and that the embodiments of the presently claimed invention described herein are capable of operation in other sequences than described or illustrated herein. In case the terms 'first', 'second', 'third' or '(A)', '(B)' and '(C)' or '(a)', '(b)', '(c)', '(d)', 'i', 'ii' etc. relate to steps of a method or use or assay there is no time or time interval coherence between the steps, that is, the steps may be carried out simultaneously or there may be time intervals of seconds, minutes, hours, days, weeks, months or even years between such steps, unless otherwise indicated in the application as set forth herein above or below.

Furthermore, the ranges defined throughout the specification include the end values as well, i.e. a range of 1 to 10 implies that both 1 and 10 are included in the range. For the avoidance of doubt, applicant shall be entitled to any equivalents according to applicable law.

In the following passages, different aspects of the presently claimed invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to 'one embodiment' or 'an embodiment' means that a particular feature, structure or characteristic described in connection with the embodiment is included in at least one embodiment of the presently claimed invention. Thus, appearances of the phrases 'in one embodiment' or 'in an embodiment' in various places throughout this specification are not necessarily all referring to the same embodiment, but may refer to the same embodiment. Further, as used in the following, the terms "preferably", "more preferably", "even more preferably", "most preferably" and "in particular" or similar terms are used in conjunction with optional features, without restricting alternative possibilities. Thus, features introduced by these terms are optional features and are not intended to restrict the scope of the claims in any way.

Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the presently claimed invention, and form different embodiments, as would be understood by those in the art. For example, in the appended claims, any of the claimed embodiments can be used in any combination.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Surprisingly, it has been found that the dispersants of the presently claimed invention have high pigment affinity and that they provide dispersions containing fine particulate solid materials that are stable and have improved properties such as low viscosity and provide surface coating with a high gloss.

The dispersants of the presently claimed invention effectively deflocculated the fine particulate solid materials even at high solid content. Moreover, the dispersants enhance the rheology behavior of dispersions, which is normally difficult to achieve at high solids content. Further, their rheology behavior does not change with time.

During application, the dispersants of the presently claimed invention provide dispersions with improved application properties such as better flowability and levelling, less spattering and sagging of the coating, and thereby increasing the gloss of the coating film and decreasing the crater number.

Accordingly, the main aspect of the presently claimed invention is a dispersant of formula (I),

T-(A)ₘ-L-Z formula (I),

wherein T is hydrogen or R¹-C(=O)-,
R¹ is a substituted or unsubstituted, linear or branched C₁-C₂₄ alkyl;
A is, identical or different, an oxyalkylenecarbonyl unit of formula -O-R²-C(=O)-,
R² is -(CH₂)₅-, -(CH₂)₄- or -(CH₂)₃-;
m is an integer in the range from 3 to 50;
L represents a group selected from the group consisting of -O- and -NH-;
Z is a nitrogen containing group selected from the group consisting of Z₁, Z₂, and Z₃;
wherein Z₁ is R¹¹R¹²N-R¹³-, Z₂ is Y-R¹⁴-, and Z₃ is Y-CH₂-CH₂-C(=O)-OR¹⁴-
R¹¹ and R¹² are independently selected from hydrogen and substituted or unsubstituted, linear or branched C₁-C₁₂ alkyl which can be the same or different, or R¹¹ and R¹² together with the nitrogen to which they are attached form a 3- to 12-membered ring comprising 0 to 3 heteroatoms,
R¹³ is a substituted or unsubstituted, linear or branched C₁-C₁₂ alkylene;
Y is a 5- or 6- membered N-containing heterocycle which comprises 1 or 2 nitrogen atoms and which can additionally comprise an oxygen atom,
R¹⁴ is a substituted or unsubstituted, linear or branched C₁-C₁₂ alkylene;
or Z is a quaternary ammonium salt derivable from the nitrogen containing group selected from the group consisting of Z₁, Z₂, and Z₃; wherein the quaternary nitrogen is attached to R¹⁵ and an anion X-,
R¹⁵ is selected from the group consisting of hydrogen, a substituted or unsubstituted, linear or branched C₁-C₂₄ alkyl, a substituted or unsubstituted C₄-C₁₀ cycloalkyl, a substituted or unsubstituted C₆-C₁₈ aryl, and substituted or unsubstituted, branched or unbranched C₇-C₁₈ arylalkyl; wherein the C₁-C₂₄ alkyl is optionally interrupted by -O-; and
X- is selected from the group consisting of Cl, Br, I, acetate and benzoate;
wherein Z is a nitrogen containing group selected from the group consisting of Z₁, Z₂, and Z₃ and the dispersant has an amine number from in the range of 30 to 100 mg KOH/g, as determined according to DIN 53176:2002-11; and
wherein Z is a quaternary ammonium salt and the dispersant has an amine number in the range of 2 to 12 mg KOH/g, as determined according to DIN 53176:2002-11.

Within the context of the presently claimed invention, the term "alkyl", as used herein, refers to an acylic saturated aliphatic group, including linear or branched alkyl saturated hydrocarbon radicals, denoted by a general formula CₙH₂ₙ₊₁ and wherein n is the number of carbon atoms such as 1, 2, 3, 4, etc. The C₁-C₂₄ alkyl is optionally interrupted by -O-. In connection with "alkyl", the term "substituted" within the scope of this invention is understood as meaning the substitution of hydrogen by 1, 2, 3, 4 or 5 substituents selected from the group consisting of F, Cl, Br, I, CN, OH, NH₂, NH-C₁-₆-alkyl, NH-C₁-₆-alkylene-OH, N(C₁₋₆-alkyl)₂, N(C₁₋₆-alkylene-OH)₂, NO₂, SH, S-C₁₋₆-alkyl, S-benzyl, O-C₁₋₁₀₋alkyl, O-C₁₋₁₀-alkylene-OH, =O, O-benzyl, C(=O)C₁₋₁₀-alkyl, CO₂H, CO₂-C₁₀-alkyl, phenyl or benzyl. The substitution of hydrogen occurs either on different atoms or on the same atom, for example trisubstituted on the same carbon atom, as in the case of CF₃ or CH₂CF₃, or at different positions, as in the case of CH(Cl)-CH=CH-CHCl₂. Polysubstitution can be carried out with the same or with different substituents, such as, for example, in the case of CH(OH)-CH=CH-CHCl₂.

The term "aryl", as used herein, refers to mono- or polycyclic, optionally substituted aromatic radicals having 6 to 20 ring carbon atoms. The term "heteroaryl" refers to "aryl" groups as described above and containing 1, 2, 3, 4, 5 or 6 heteroatoms such as N or O. The term "alkylaryl" refers to alkyl-substituted analogs of the above "aryl" groups. In connection with "aryl", the term "substituted" within the scope of this invention is understood as meaning the substitution of hydrogen by 1, 2, 3, 4 or 5 substituents selected from the group consisting of F, Cl, Br, I, CN, OH, NH₂, NH-C₁-₆-alkyl, NH-C₁-₆-alkylene-OH, N(C₁₋₆-alkyl)₂, N(C₁₋₆-alkylene-OH)₂, NO₂, SH, S-C₁₋₆-alkyl, S-benzyl, O-C₁₋₁₀₋alkyl, O-C₁₋₁₀-alkylene-OH, =O, O-benzyl, C(=O)C₁₋₁₀-alkyl, CO₂H, CO₂-C₁₀-alkyl, phenyl or benzyl.

In a preferred embodiment, the dispersant of formula (I) is,

T-(A)ₘ-L-Z formula (I),

wherein T is hydrogen or R'-C(=O)-,
R¹ is a substituted or unsubstituted, linear or branched C₁-C₂₄ alkyl;
A is, identical or different, an oxyalkylenecarbonyl unit of formula -O-R²-C(=O)-,
R² is -(CH₂)₅-, -(CH₂)₄- or -(CH₂)₃;
m is an integer in the range from 3 to 50;
L represents a group selected from the group consisting of -O- and -NH-;
Z is a nitrogen containing group selected from the group consisting of Z₁, Z₂, and Z₃, wherein the dispersant has an amine number from in the range of 30 to 100 mg KOH/g, as determined according to DIN 53176:2002-11;
wherein Z₁ is R¹¹R¹²N-R¹³-, Z₂ is Y-R¹⁴-, and Z₃ is Y-CH₂-CH₂-C(=O)-OR¹⁴-
R¹¹ and R¹² are independently selected from hydrogen and substituted or unsubstituted, linear or branched C₁-C₁₂ alkyl which can be the same or different, or R¹¹ and R¹² together with the nitrogen to which they are attached form a 3- to 12-membered ring comprising 0 to 3 heteroatoms,
R¹³ is a substituted or unsubstituted, linear or branched C₁-C₁₂ alkylene;
Y is a 5- or 6- membered N-containing heterocycle which comprises 1 or 2 nitrogen atoms and which can additionally comprise an oxygen atom, and
R¹⁴ is a substituted or unsubstituted, linear or branched C₁-C₁₂ alkylene.

In a preferred embodiment, the dispersant of formula (I) is,

T-(A)ₘ-L-Z formula (I),

wherein T is hydrogen or R'-C(=O)-,
R¹ is a substituted or unsubstituted, linear or branched C₁-C₂₄ alkyl;
A is, identical or different, an oxyalkylenecarbonyl unit of formula -O-R²-C(=O)-,
R² is -(CH₂)₅-, -(CH₂)₄- or -(CH₂)₃-;
m is an integer in the range from 3 to 50;
L represents a group selected from the group consisting of -O- and -NH-;
Z is a quaternary ammonium salt derivable from the nitrogen containing group selected from the group consisting of Z₁, Z₂, and Z₃; and wherein the quaternary nitrogen is attached to R¹⁵ and an anion X-, wherein the dispersant has an amine number in the range of 2 to 12 mg KOH/g, as determined according to DIN 53176:2002-11;
wherein Z₁ is R¹¹R¹²N-R¹³-, Z₂ is Y-R¹⁴-, and Z₃ is Y-CH₂-CH₂-C(=O)-OR¹⁴-
R¹¹ and R¹² are independently selected from hydrogen and substituted or unsubstituted, linear or branched C₁-C₁₂ alkyl which can be the same or different, or R¹¹ and R¹² together with the nitrogen to which they are attached form a 3- to 12-membered ring comprising 0 to 3 heteroatoms,
R¹³ is a substituted or unsubstituted, linear or branched C₁-C₁₂ alkylene;
Y is a 5- or 6- membered N-containing heterocycle which comprises 1 or 2 nitrogen atoms and which can additionally comprise an oxygen atom,
R¹⁴ is a substituted or unsubstituted, linear or branched C₁-C₁₂ alkylene;
R¹⁵ is selected from the group consisting of hydrogen, a substituted or unsubstituted, linear or branched C₁-C₂₄ alkyl, a substituted or unsubstituted C₄-C₁₀ cycloalkyl, a substituted or unsubstituted C₆-C₁₈ aryl, and substituted or unsubstituted, branched or unbranched C₇-C₁₈ arylalkyl; wherein the C₁-C₂₄ alkyl is optionally interrupted by -O-; and
X- is selected from the group consisting of Cl, Br, I, acetate and benzoate.

In a preferred embodiment, the dispersant of formula (I) is,

T-[O-R²-C(=O)]ₘ-L-Z formula (I),

wherein T is hydrogen or R'-C(=O)-,
R¹ is a substituted or unsubstituted, linear or branched C₁-C₂₄ alkyl;
R² is -(CH₂)₅-, -(CH₂)₄- or -(CH₂)₃-;
m is an integer in the range from 3 to 50;
L represents a group selected from the group consisting of -O-, and -NH-;
Z is a nitrogen containing group selected from the group consisting of Z₁, Z₂, and Z₃;
wherein Z₁ is R¹¹R¹²N-R¹³-, Z₂ is Y-R¹⁴-, and Z₃ is Y-CH₂-CH₂-C(=O)-OR¹⁴- , wherein the dispersant has an amine number from in the range of 30 to 100 mg KOH/g, as determined according to DIN 53176:2002-11;
R¹¹ and R¹² are independently selected from hydrogen and substituted or unsubstituted, linear or branched C₁-C₁₂ alkyl which can be the same or different, or R¹¹ and R¹² together with the nitrogen to which they are attached form a 3- to 12-membered ring comprising 0 to 3 heteroatoms,
R¹³ is a substituted or unsubstituted, linear or branched C₁-C₁₂ alkylene;
Y is a 5- or 6- membered N-containing heterocycle which comprises 1 or 2 nitrogen atoms and which can additionally comprise an oxygen atom,
R¹⁴ is a substituted or unsubstituted, linear or branched C₁-C₁₂ alkylene;
or Z is a quaternary ammonium salt derivable from the nitrogen containing group selected from the group consisting of Z₁, Z₂, and Z₃; wherein the quaternary nitrogen is attached to R¹⁵ and an anion X-, wherein the dispersant has an amine number in the range of 2 to 12 mg KOH/g, as determined according to DIN 53176:2002-11;
R¹⁵ is selected from the group consisting of hydrogen, a substituted or unsubstituted, linear or branched C₁-C₂₄ alkyl, a substituted or unsubstituted C₄-C₁₀ cycloalkyl, a substituted or unsubstituted C₆-C₁₈ aryl, and substituted or unsubstituted, branched or unbranched C₇-C₁₈ arylalkyl; wherein the C₁-C₂₄ alkyl is optionally interrupted by -O-; and
X- is selected from the group consisting of Cl, Br, I, acetate and benzoate.

In a preferred embodiment, the dispersant of formula (I) is,

T-(A¹)_{M1}(A²)_{M2}-L-Z formula (I),

wherein T is hydrogen or R'-C(=O)-,
R¹ is a substituted or unsubstituted, linear or branched C₁-C₂₄ alkyl;
A¹ and A² are different from each other and selected from the group consisting of -O-(CH₂)₅-C(=O)-, -O-(CH₂)₄-C(=O)- and -O-(CH₂)₃-C(=O)-; and M1 and M2 are, identical or different, an integer in the range from 1 to 40, and the ratio of M1 and M2 is in the range from 10:1 to 1:10;
R² is -(CH₂)₅-, -(CH₂)₄- or -(CH₂)₃-;
m is an integer in the range from 3 to 50;
L represents a group selected from the group consisting of -O-, and -NH-;
Z is a nitrogen containing group selected from the group consisting of Z₁, Z₂, and Z₃;
wherein Z₁ is R¹¹R¹²N-R¹³-, Z₂ is Y-R¹⁴-, and Z₃ is Y-CH₂-CH₂-C(=O)-OR¹⁴- , wherein the dispersant has an amine number from in the range of 30 to 100 mg KOH/g, as determined according to DIN 53176:2002-11,
R¹¹ and R¹² are independently selected from hydrogen and substituted or unsubstituted, linear or branched C₁-C₁₂ alkyl which can be the same or different, or R¹¹ and R¹² together with the nitrogen to which they are attached form a 3- to 12-membered ring comprising 0 to 3 heteroatoms,
R¹³ is a substituted or unsubstituted, linear or branched C₁-C₁₂ alkylene;
Y is a 5- or 6- membered N-containing heterocycle which comprises 1 or 2 nitrogen atoms and which can additionally comprise an oxygen atom,
R¹⁴ is a substituted or unsubstituted, linear or branched C₁-C₁₂ alkylene;
or Z is a quaternary ammonium salt derivable from the nitrogen containing group selected from the group consisting of Z₁, Z₂, and Z₃; wherein the quaternary nitrogen is attached to R¹⁵ and an anion X-, wherein the dispersant has an amine number in the range of 2 to 12 mg KOH/g, as determined according to DIN 53176:2002-11,
R¹⁵ is selected from the group consisting of hydrogen, a substituted or unsubstituted, linear or branched C₁-C₂₄ alkyl, a substituted or unsubstituted C₄-C₁₀ cycloalkyl, a substituted or unsubstituted C₆-C₁₈ aryl, and substituted or unsubstituted, branched or unbranched C₇-C₁₈ arylalkyl; wherein the C₁-C₂₄ alkyl is optionally interrupted by -O-; and
X- is selected from the group consisting of Cl, Br, I, acetate and benzoate.

In a preferred embodiment, R¹ selected from the group consisting of CH₃(CH₂)₃-, CH₃(CH₂)₁₀-, and CH₃(CH₂)₁₆-.

In a more preferred embodiment, T is hydrogen.

In another more preferred embodiment, T is CH₃(CH₂)₁₀-C(=O)-.

In a preferred embodiment, m is an integer in the range from 3 to 20; more preferably in the range from 5 to 15; and most preferably in the range from 5 to 10.

In a particularly preferred embodiment, m is 5. In another particularly preferred embodiment, m is 10.

In a preferred embodiment, (A)ₘ is (A¹)_{M1}(A²)_{M2}, wherein A¹ and A² are different from each other and selected from the group consisting of -O-(CH₂)₅-C(=O)-, -O-(CH₂)₄-C(=O)- and -O-(CH₂)₃-C(=O)-; and M1 and M2 are, identical or different, an integer in the range from 1 to 40, and the ratio of M1 and M2 is in the range from 10:1 to 1:10.

In a more preferred embodiment, the ratio of M1 and M2 is in the range from 5:1 to 1:5; most preferably in the range from 2:1 to 1:2.

In a preferred embodiment, (A)ₘ is (-O-(CH₂)₅-C(=O)-)_{M1}(-O-(CH₂)₄-C(=O)-)_{M2}, wherein M1 and M2 are, identical or different, an integer in the range from 1 to 40, and the ratio of M1 and M2 is in the range from 10:1 to 1:10; more preferably in the range from 5:1 to 1:5; most preferably in the range from 2:1 to 1:2.

In a particularly preferred embodiment, (A)ₘ is (-O-(CH₂)₅-C(=O)-)_{M1}(-O-(CH₂)₄-C(=O)-)_{M2}, wherein M1 and M2 are, identical or different, an integer in the range from 1 to 40, and the ratio of M1 and M2 is 5:3.

In a preferred embodiment, R¹¹ and R¹² are unsubstituted, linear or branched C₁-C₈ alkyl, and R¹³ is unsubstituted, linear or branched C₁-C₈ alkylene.

In a more preferred embodiment, R¹¹ and R¹² are unsubstituted, linear or branched C₁-C₄ alkyl, and R¹³ is unsubstituted, linear or branched C₁-C₄ alkylene.

In a most preferred embodiment, R¹¹ is methyl, R¹² is methyl and R¹³ is -CH₂CH₂CH₂-.

In a preferred embodiment, Y is selected from the group consisting of imidazolyl, morpholinyl and piperidinyl.

In a particularly preferred embodiment, Y is imidazolyl. In another particularly preferred embodiment, Y is piperidinyl.

In a preferred embodiment, R¹⁴ is selected from the group consisting of -CH₂-, -CH₂CH₂-, - CH₂CH₂CH₂- and -CH₂CH₂CH₂CH₂-.

In a preferred embodiment, Z is a quaternary ammonium salt derivable from the nitrogen containing group selected from the group consisting of Z₁, Z₂, and Z₃; wherein the quaternary nitrogen is attached to R¹⁵ and an anion X-, wherein the dispersant has an amine number from in the range of 30 to 100 mg KOH/g, as determined according to DIN 53176:2002-11.

In a more preferred embodiment, the dispersant comprising quaternary ammonium salt is derivable from the nitrogen containing basic compound selected from the group consisting of 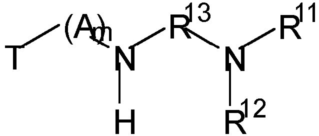 , and 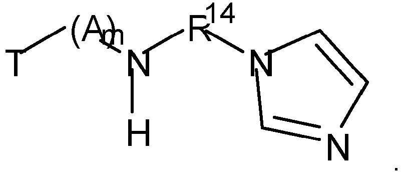 , wherein T, (A)ₘ, R¹¹, R¹², R¹³ and R¹⁴ are as defined above.

In a more preferred embodiment, the dispersant comprising quaternary ammonium salt is selected from the 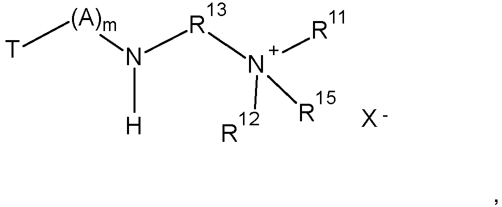 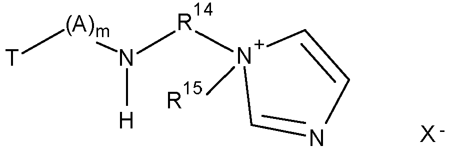 , wherein T, (A)ₘ, R¹¹, R¹², R¹³, R¹⁴, R¹⁵, and X are as defined above.

In a preferred embodiment, R¹⁵ is selected from the group consisting of -CH₂CH(OH)CH₂-O-CH₂CH(C₂H₅)CH₂CH₂CH₂CH₃, -CH₂-phenyl and -CH₂CH₂CH₂-phenyl, wherein phenyl is unsubstituted or substituted by 1, 2 or 3 substituents selected from the group consisting of chloride, bromide, hydroxy, NO₂ and methoxy.

In a particularly preferred embodiment, R¹⁵ is 2-chlorobenzyl. In another particularly preferred embodiment, R¹⁵ is 3-phenylpropyl.

In a preferred embodiment, X- is selected from the group consisting of Cl, Br, I, acetate and benzoate.

In a particularly preferred embodiment, X- is chloride. In another particularly preferred embodiment, X- is bromide. In yet another particularly preferred embodiment, X- is benzoate.

Another aspect of the presently claimed invention is directed to a process for preparing a dispersant of formula (I). The process comprises the following steps.
i. A compound of formula R¹¹R¹²N-R¹³-NH₂ is mixed with a lactone monomer of formula (II), 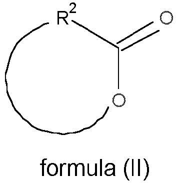 or a polyester homopolymer or copolymer obtainable from the lactone monomer of formula (II) to obtain a reaction mixture, wherein R², R¹¹, R¹² and R¹³ are as defined above.
ii. The reaction mixture as obtained in step i. is heated at a temperature in the range of 70 to 150 °C to obtain a homogeneous mixture.
iii. The homogeneous mixture as obtained in step ii. is heated at a temperature in the range of 100 to 300 °C to obtain the dispersant of formula (I).

In a preferred embodiment, the lactone monomer of formula (II) is selected from the group consisting of ε-caprolactone, γ-valerolactone, γ-butyrolactone, wherein the lactone monomer is unsubstituted or substituted by 1, 2 or 3 substituents selected from the group consisting of methyl, hydroxy and methoxy.

In a preferred embodiment, the compound of formula R¹¹R¹²N-R¹³-NH₂ is selected from the group consisting of 3-(dimethylamino)-1-propylamine, 1-(3-aminopropyl)imidazole, N-(2-aminoethyl)morpholine, N-(2-aminoethyl)-piperidine, and 4-aminomethyl-piperidine.

Another aspect of the presently claimed invention is directed to a process for preparing the dispersant of formula (I). The process comprises the following steps.
a. A hydroxyalkyl acrylate of formula CH₂=CH-C(=O)-O-R¹⁴-OH is heated with a 5- or 6-membered N-containing heterocycle of formula YH at a temperature in the range of 30 to 100 °C to obtain a resultant mixture, wherein Y and R¹⁴ are defined as defined above.
b. The lactone monomer of formula (II) 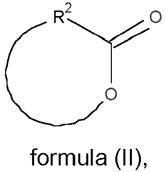
   wherein R² is as defined above,
   or a polyester homopolymer or copolymer obtainable from the lactone monomer of formula (II) is added to the resultant mixture as obtained in step a. to obtain a reaction mixture, wherein Y, R² and R¹⁴ are defined as defined above.
c. The reaction mixture as obtained in step b. is heated at a temperature in the range of 70 to 150 °C to obtain a homogeneous mixture.
d. The homogeneous mixture as obtained in step c. is heated at a temperature in the range of 100 to 300 °C to obtain the dispersant of formula (I).

In a preferred embodiment, the N-containing heterocycle of formula YH is selected from the group consisting of imidazole, morpholine and piperidine.

In a preferred embodiment, the polyester homopolymer or copolymer is obtained by heating a mixture comprising a carboxylic acid of formula R'-C(=O)-OH, wherein R¹ is defined as above, and the lactone monomer of formula (II) in the presence of a catalyst at a temperature in the range of 50 to 150 °C.

In a preferred embodiment, R'-C(=O-)OH is lauric acid, and the catalyst is dibutyltin dilaurate.

In a preferred embodiment, the process further comprises a step of quaternizing the dispersant obtained in step (iii) or step (d) by heating a mixture comprising the dispersant and an alkylating agent at a temperature in the range of 50 to 150 °C.

In a preferred embodiment, the alkylating agent is selected from the group consisting of an alkyl halide of formula R¹⁵X and an epoxide of formula (III), 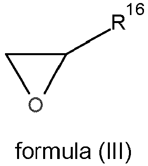 wherein R¹⁵ is as defined above and R¹⁶ is a hydrogen or a substituted or unsubstituted, linear or branched C₁-C₂₄ alkyl, a substituted or unsubstituted C₄-C₁₀ cycloalkyl, a substituted or unsubstituted C₆-C₁₈ aryl, and substituted or unsubstituted, branched or unbranched C₇-C₁₆ arylalkyl; wherein the C₁-C₂₄ alkyl is optionally interrupted by -O-.

In a preferred embodiment, the alkyl halide of formula R¹⁵-X is selected from the group consisting of 2-chlorobenzylchloride, and 1-bromo-3-phenylpropane.

In a preferred embodiment, the epoxide of formula (III) is selected from the group consisting of 2-ethylhexyl glycidyl ether, dodecyl glycidyl ether, tetradecyl glycidyl ether and 1,2-epoxydodecan.

Yet another aspect of the presently claimed invention is directed to a liquid composition in the form of a dispersion comprising the dispersant of the presently claimed invention, a particulate solid material selected from the group consisting of pigments and fillers, and a liquid diluent.

Still another aspect of the presently claimed invention is directed to use of the dispersant as described above as a component of a coating composition or an ink composition.

The dispersants of the presently claimed invention can be used in broad application fields, such as coatings, inks and electronic materials. These dispersants can be used in solvent based systems such as organic and inorganic pigments dispersion, e.g. in alkyd, CAB (cellulose acetate butyrate), UV (Ultraviolet) and TPA (thermoplastic acrylate) paint systems, industrial coatings as well as in printing inks and graphic arts.

The composition comprises fine particulate solid materials and a liquid diluent.

The fine particulate solid materials include, but are not limited, to pigments and fillers. The pigments can be inorganic or organic.

In a preferred embodiment, the size of the solid particulate material represented as the weight average particle diameter is in the range from 1 nm to 20000 nm; more preferably form 10 nm to 10000 nm; and most preferably from 20 nm to 500 nm. The weight average particle diameter may be determined by sieving analysis or by light scattering methods.

In a particularly preferred embodiment, the pigment is carbon black and the weight average particle diameter of the pigment is in the range from 100 nm to 300 nm.

In a preferred embodiment, the organic pigments are pigments and pearlescent flakes selected from the group consisting of azo, disazo, naphthol, benzimidazolone, azocondensation, metal complex, isoindolinone, and isoindoline pigments, the chinophthalon pigment, dioxazine pigment and the polycyclic pigment group consisting of indigo, thioindigo, quinacridones, phthalocyanines, perylenes, perionones, anthraquinones, such as aminoanthraquinones or hydroxyanthraquinones, anthrapyrimidines, indanthrones, flavanthrones, pyranthrones, anthantrones, isoviolanthrones, diketopyrrolopyrrole, and carbazoles, e.g. carbazole violet, and the like. Further examples of organic pigments can be found in the monograph: W. Herbst, K. Hunger "Industrielle Organische Pigmente"2nd Edition, 1995, VCH Verlagsgesellschaft, ISBN: 3-527-28744-2.

In a preferred embodiment, the inorganic pigments are selected from the group consisting of metallic flakes, such as aluminium, aluminium oxide, calcium carbonate, silicon oxide and silicates, iron(III)oxide, chromium(III)oxide, titanium(IV)oxide, zirconium(IV)oxide, zinc oxide, zinc sulphide, zinc phosphate, mixed metal oxide phosphates, molybdenum sulphide, cadmium sulphide, carbon black or graphite, vanadates, such as bismuth vanadate, chromates, such as lead(IV)chromate, and molybdates, such as lead(IV)molybdate, and mixtures, crystal forms or modifications thereof, such as rutile, anatase, mica, talcum, kaolin, and mixtures thereof.

In a preferred embodiment, the fillers are selected from the group consisting of calcium carbonate, silicates, glass fibers, glass beads, talc, kaolin, mica, barium sulphate, metal oxides and hydroxides, carbon black, graphite, wood powders, powders and fibers of other natural products, synthetic fibers and mixtures thereof.

The liquid diluent present in the dispersion will depend on the field of application.

For water-based formulations, the liquid diluent comprises water and may further comprise polar, water-miscible solvents such as C₁-C₄ alkanols, e.g. methanol, ethanol, isopropanol, propanol or n-butanol, glycol ethers like butyl glycol, or methoxypropylene glycol, polyols, e.g. glycerol, ethyleneglycol, diethyleneglycol, triethylene, triethylene glycol or propylene glycol.

For solvent based formulations, the liquid diluent is selected from low polarity solvents such as aliphatic hydrocarbons, esters like butyl acetate, or glycol ethers like methoxypropylene glycol and glycol ether esters like methoxypropylene glycol acetate and mixtures thereof.

In a preferred embodiment, the weight ratio of the fine particulate solid materials to the liquid diluent is in the range from 100:1 to 1:50; and more preferably in the range from 30:1 to 1:10.

The dispersion further comprises a binder and/or one or more additives depending on the intended use. The additive includes but are not limited to plasticizers, lubricants, emulsifiers, humectants, rheology additives, catalysts, flow auxiliaries, optical brighteners, flame retardants, preservatives, antistatic agents and blowing agents.

In a preferred embodiment, the dispersion is in the form of a mill base. The millbase comprises the fine particulate solid materials, the dispersant of formula (I), the liquid diluent and optionally additives, but generally mill base will not contain binders.

In a preferred embodiment, the dispersion is in the form of a coating composition. The coating composition comprises the fine particulate solid materials, the dispersant of formula (I), the liquid diluent and additionally at least one binder, e.g. film-forming polymers or prepolymers which form a film upon curing. The coating composition further comprise additives conventionally used in coating technology, e.g. plasticizers, lubricants, emulsifiers, rheology additives, catalysts, flow auxiliaries, optical brighteners, flame retardants, preservatives, antistatic agents or blowing agents.

In a preferred embodiment, the dispersion is in the form of an ink composition, e.g. a printing ink or a gravure ink. The ink composition comprises the fine particulate solid materials, the dispersant of formula (I), the liquid diluent and additionally at least one binder conventionally used in ink technology, e.g. film-forming polymers or prepolymers which form a film upon curing.

The presently claimed invention offers one or more of the following advantages:
1) The dispersants of the presently claimed invention provide stable dispersions with a high pigment loading.
2) Dispersions containing the dispersants of the presently claimed invention have a low viscosity. The viscosity of the dispersions is significantly reduced even at a high pigment loading.
3) The dispersants of the presently claimed invention enhance the rheology behavior of dispersions. Further, their rheology behavior does not change with time.
4) Surfaces coated with coating compositions comprising the dispersants of the presently claimed invention display a high gloss and a reduced crater number.

### Examples

The presently claimed invention is illustrated in detail by non-restrictive working examples which follow. More particularly, the test methods specified hereinafter are part of the general disclosure of the application and are not restricted to the specific working examples.

### Materials

| | |
|---|---|
| CAB-531 | Cellulose acetate butyrate material commercially is available from Eastman Chemical. |
| Uracron^{™} CR 226 XB-50 | Thermosetting hydroxy acrylic resin is available from DSM Coating. |
| Uramex^{™} MF 821 | Non-plasticized n-butylated melamine formaldehyde resin is available from DSM Coating. |

### Methods

Acid number: The acid number was determined according to DIN 53402:1990-09.

Amine number: The amine number was determined according to DIN 53176:2002-11.

Solid content: The solid content was determined via moisture analyzer (HE73, Mettler Toledo, ~0.5g, 10min@175°C).

Viscosity: The viscosity was determined by analogy to DIN 53019-1:2008-09, using a Thermo-Haake RheoStress 600 equipment under the CR mode at 22°C and a shear rate of 1 sec⁻¹ (Spindle CP50).

Gloss: The gloss of the obtained coatings at 20° angle was determined according to DIN 67530/DIN EN ISO 2813:2012-10 using a commercial reflectometer (Micro-Tri-Gloss reflectometer from BYK Gardner).

### A) Preparation of the dispersants

### Comparative example A: (non-amine end capped dispersant)

A mixture of 10 g lauric acid, 40 g ε-caprolactone and 0,05 g dibutyltin dilaurate (DBTL) was stirred at 100°C until a homogenous mixture was obtained. Then, the mixture was heated and stirred at 180°C under nitrogen gas until the solid content was 97%. A yellowish solid dispersant with an acid number of 55 mg KOH/g was obtained.

### Preparation of dispersants of the presently claimed invention

### Example 1: Preparation of Dispersant 1

A mixture of 10.2 g 3-(dimethylamino)-1-propylamine and 57 g ε-caprolactone was stirred at 100°C until a homogenous mixture was obtained. Then, the mixture was heated and stirred at 180°C under nitrogen gas until the solid content was 97%. A yellowish solid dispersant with an amine number of 80 mg KOH/g was obtained.

### Example 2: Preparation of Dispersant 2

A mixture of 10.2 g 3-(dimethylamino)-1-propylamine and 114 g ε-caprolactone was stirred at 100°C until a homogenous mixture was obtained. Then, the mixture was heated and stirred at 180°C under nitrogen gas until the solid content was 97%. A yellowish solid dispersant with an amine number of 43 mg KOH/g was obtained.

### Example 3: Preparation of Dispersant 3

A mixture of 12.5 g 1-(3-aminopropyl)imidazole and 57 g ε-caprolactone was stirred at 100°C until a homogenous mixture was obtained. Then, the mixture was heated and stirred at 180°C under nitrogen gas until the solid content was 97%. A yellowish solid dispersant with an amine number of 75 mg KOH/g was obtained.

### Example 4: Preparation of Dispersant 4

A mixture of 12.5 g 1-(3-aminopropyl)imidazole and 114 g ε-caprolactone was stirred at 100°C until a homogenous mixture was obtained. Then, the mixture was heated and stirred at 180°C under nitrogen gas until the solid content was 97%. A yellowish solid dispersant with an amine number of 42 mg KOH/g was obtained.

### Example 5: Preparation of Dispersant 5

A mixture of 12.5 g 1-(3-aminopropyl)imidazole, 57 g ε-caprolactone and 30 g γ-valerolactone was stirred at 100°C until a homogenous mixture was obtained. Then, the mixture was heated and stirred at 180°C under nitrogen gas until the solid content was 97%. A yellowish liquid dispersant with an amine number of 55 mg KOH/g was obtained.

### Example 6: Preparation of Dispersant 6

11.6 g 2-Hydroxyethyl acrylate was stirred in the reactor at room temperature, and 6.8 g imidazole solid was slowly added. The mixture was stirred at 50°C for 3 hours. Then, 57 g ε-caprolactone and 30 g γ-valerolactone were added and stirred at 100°C until a homogenous mixture was obtained. The mixture was heated and stirred at 180°C under nitrogen gas until the solid content was 97%. A yellowish liquid dispersant with an amine number of 51 mg KOH/g was obtained.

### Example 7: Preparation of Dispersant 7

A mixture of 14.4 g N-(3-aminopropyl)morpholine and 114 g ε-caprolactone was stirred at 100°C until a homogenous mixture was obtained. Then, the mixture was heated and stirred at 180°C under nitrogen gas until the solid content was 97%. A yellowish solid dispersant with an amine number of 40 mg KOH/g was obtained.

### Example 8: Preparation of Dispersant 8

A mixture of 12.8 g N-(2-aminoethyl)-piperidine, 57 g ε-caprolactone and 30 g γ-valerolactone was stirred at 100°C until a homogenous mixture was obtained. Then, the mixture was heated and stirred at 180°C under nitrogen gas until the solid content was 97%. A yellowish liquid dispersant with an amine number of 54 mg KOH/g was obtained.

### Example 9: Preparation of Dispersant 9

A mixture of 10.8 g 4-(aminomethyl)pyridine, 57 g ε-caprolactone and 30 g γ-valerolactone was stirred at 100°C until a homogenous mixture was obtained. Then, the mixture was heated and stirred at 180°C under nitrogen gas until the solid content was 97%. A yellowish liquid dispersant with an amine number of 58 mg KOH/g was obtained.

### Example 10: Preparation of Dispersant 10

A mixture of 10 g lauric acid, 40 g ε-caprolactone and 0,05 g dibutyltin dilaurate (DBTL) was stirred at 100°C until a homogenous mixture was obtained. Then, the mixture was heated and stirred at 180°C under nitrogen gas until the solid content was 97%. 5,1 g 3-(Dimethylamino)-1-propylamine was added, and stirred at 180°C under nitrogen gas until the amine number was 50 mg KOH/g. A yellowish solid dispersant was obtained.

### Example 11: Preparation of Dispersant 11

A mixture of 10 g lauric acid, 40 g ε-caprolactone and 0,05 g dibutyltin dilaurate (DBTL) was stirred at 100°C until a homogenous mixture was obtained. Then, the mixture was heated and stirred at 180°C under nitrogen gas until the solid content was 97%. 6,3 g 1-(3-Aminopropyl)imidazole was added, and stirred at 180°C under nitrogen gas until the amine number 50 mg KOH/g. A yellowish solid dispersant was obtained.

### Example 12: Preparation of Dispersant 12

A mixture of 70 g Dispersant 1 (obtained in Example 1), 18,6 g 2-ethylhexyl glycidyl ether and 12,2 g benzoic acid was stirred at 120°C until the amine number less than 10mgKOH/g. A yellowish solid dispersant was obtained.

### Example 13: Preparation of Dispersant 13

A mixture of 75 g Dispersant 3 (obtained in Example 3), and 16 g 2-chlorobenzylchloride was stirred at 100°C until the amine number less than 10mgKOH/g. A yellowish solid dispersant was obtained.

### Example 14: Preparation of Dispersant 14

A mixture of 75 g Dispersant 3 (obtained in Example 3), 18,6 g 2-ethylhexyl glycidyl ether and 12,2 g benzoic acid was stirred at 120°C until the amine number was less than 10mgKOH/g. A yellowish solid dispersant was obtained.

### Example 15: Preparation of Dispersant 15

A mixture of 102 g Dispersant 5 (obtained in Example 5) and 16 g 2-chlorobenzylchloride was stirred at 100°C until the amine number was less than 5 mg KOH/g. A yellowish liquid dispersant was obtained.

### Example 16: Preparation of Dispersant 16

A mixture of 97 g Dispersant 9 (obtained in Example 9) and 20 g 1-bromo-3-phenylpropane was stirred at 100°C until the amine number was less than 5 mg KOH/g. A yellowish liquid dispersant was obtained.

### B) Performance testing:

### Preparation of a paint composition for testing

### Step 1: Preparation of millbase or pigment concentrate

The dispersion effect of the dispersants of the presently claimed invention was evaluated by preparing resin free millbase according to the Formulation 1.

For comparison, a resin free millbase was prepared from the dispersant prepared according to comparative example A and the dispersants according to the presently claimed invention.

### Formulation 1: Preparation of millbase

| No. | Component | Amount |
|---|---|---|
| 1) | Dispersant (100% solid) | 3.7 g |
| 2) | Methoxypropylacetate (MPA) solvent | 26.4 g |
| 3) | Pigment: Carbon Black FW 200 | 4.9 g |
| 4) | 2.0 mm glass beads | 35 g |
| | Total | 70 g |

The milling step was carried out in a Scandex Shaker with the help of glass beads for 4 hours to obtain a dispersion or millbase. The dispersion was filtered and stored at room temperature overnight.

The viscosity of the millbase was determined and the results are summarized in **Table 1.**

**Table 1: Millbase viscosity (Viscosity @ 1 S⁻¹)**

| Dispersant | MPa.s |
|---|---|
| Comparative example A | 90500 |
| Dispersant 2 | 8550 |
| Dispersant 3 | 16500 |
| Dispersant 5 | 10500 |
| Dispersant 6 | 5500 |
| Dispersant 15 | 3500 |

It is evident from Table 1 that the millbase prepared using the dispersants of the presently claimed invention have a low millbase viscosity. On the contrary, the millbase prepared using the comparative dispersant has a very high viscosity.

### Step 2) Preparation of a paint composition

A paint composition was prepared by dispersing 2.0 g millbase into 8.0 g let-down system according to Formulation 2 via Dispermat^{®} for 2 min at 2000 rpm.

### Formulation 2: Let-down system

| | | |
|---|---|---|
| CAB base coat | CAB 531-1 | 11.2 |
| | Butyl acetate | 51.9 |
| | Uracron^{™} CR 226 XB 50 | 32.1 |
| | Uramex^{™} MF 821 | 4.8 |
| | Total | 100.0 |

### Application example

The paint composition was applied as a polyester film with a 75 µm film thickness. The results are summarized in **Table 2.**

### Table 2. Gloss (20°) and crater ranking

| Dispersant | Gloss | Crater* |
|---|---|---|
| Comparative example A | 60 | 3 |
| Dispersant 2 | 68 | 1 |
| Dispersant 3 | 67 | 1 |
| Dispersant 5 | 71 | 1 |
| Dispersant 6 | 70 | 1 |
| Dispersant 15 | 68 | 2 |

| | | |
|---|---|---|
| *) 1 means no crater and 5 means many craters | | |

It is evident from **Table 2** that the performance of the paints prepared using the dispersants of the presently claimed invention was very good with satisfactory results such as high gloss and low craters, as compared to that of the dispersant from comparative example 1.

## Claims

1. A dispersant of formula (I),
T-(A)ₘ-L-Z formula (I),
wherein T is hydrogen or R¹-C(=O)-,
R¹ is a substituted or unsubstituted, linear or branched C₁-C₂₄ alkyl;
A is, identical or different, an oxyalkylenecarbonyl unit of formula -O-R²-C(=O)-,
R² is -(CH₂)₅-, -(CH₂)₄- or -(CH₂)₃-;
m is an integer in the range from 3 to 50;
L represents a group selected from the group consisting of -O- and -NH-;
Z is a nitrogen containing group selected from the group consisting of Z₁, Z₂, and Z₃; wherein Z₁ is R¹¹R¹²N-R¹³-, Z₂ is Y-R¹⁴-, and Z₃ is Y-CH₂-CH₂-C(=O)-OR¹⁴-
R¹¹ and R¹² are independently selected from hydrogen and substituted or unsubstituted, linear or branched C₁-C₁₂ alkyl which can be the same or different, or R¹¹ and R¹² together with the nitrogen to which they are attached form a 3- to 12-membered ring comprising 1 to 3 heteroatoms,
R¹³ is a substituted or unsubstituted, linear or branched C₁-C₁₂ alkylene;
Y is a 5- or 6- membered N-containing heterocycle which comprises 1 or 2 nitrogen atoms and which can additionally comprise an oxygen atom,
R¹⁴ is a substituted or unsubstituted, linear or branched C₁-C₁₂ alkylene;
or Z is a quaternary ammonium salt derivable from the nitrogen containing group selected from the group consisting of Z₁, Z₂, and Z₃; wherein the quaternary nitrogen is attached to R¹⁵ and an anion X⁻,
R¹⁵ is selected from the group consisting of hydrogen, a substituted or unsubstituted, linear or branched C₁-C₂₄ alkyl, a substituted or unsubstituted C₄-C₁₀ cycloalkyl, a substituted or unsubstituted C₆-C₁₈ aryl, and substituted or unsubstituted, branched or unbranched C₇-C₁₈ arylalkyl; wherein the C₁-C₂₄ alkyl is optionally interrupted by -O-; and
X⁻ is selected from the group consisting of Cl, Br, I, acetate and benzoate;
wherein Z is a nitrogen containing group selected from the group consisting of Z₁, Z₂, and Z₃ and the dispersant has an amine number from 30 to 100 mg KOH/g, as determined according to DIN 53176:2002-11; and
wherein Z is a quaternary ammonium salt and the dispersant has an amine number from 2 to 12 mg KOH/g, as determined according to DIN 53176:2002-11.

2. The dispersant according to claim 1, wherein R¹ selected from the group consisting of CH₃(CH₂)₃-, CH₃(CH₂)₁₀-, and CH₃(CH₂)₁₆-.

3. The dispersant according to claim 1 or 2, wherein m is an integer in the range from 2 to 20.

4. The dispersant according to any of claims 1 to 3, wherein (A)ₘ is (A¹)_{M1}(A²)_{M2}, wherein A¹ and A² are different from each other and selected from the group consisting of -O-(CH₂)₅-C(=O)-, -O-(CH₂)₄-C(=O)- and -O-(CH₂)₃-C(=O)-; and
M1 and M2 are, identical or different, an integer in the range from 1 to 40, and the ratio of M1 and M2 is in the range from 10:1 to 1:10.

5. The dispersant according to any of claims 1 to 4, wherein (A)ₘ is (-O-(CH₂)₅-C(=O)-)_{M1}(-O-(CH₂)₄-C(=O)-)_{M2}, wherein M1 and M2 are, identical or different, an integer in the range from 1 to 40, and the ratio of M1 and M2 is in the range from 10:1 to 1:10.

6. The dispersant according to any of claims 1 to 5, wherein R¹¹ and R¹² are independently unsubstituted, linear or branched C₁-C₈ alkyl, and R¹³ is unsubstituted, linear or branched C₁-C₈ alkylene.

7. The dispersant according to any of claims 1 to 6, wherein R¹¹ is methyl, R¹² is methyl and R¹³ is -CH₂CH₂CH₂-.

8. The dispersant according to any of claims 1 to 7, wherein Y is selected from the group consisting of imidazolyl, morpholinyl and piperidinyl.

9. The dispersant according to any of claims 1 to 8, wherein R¹⁴ is selected from the group consisting of -CH₂-,-CH₂CH₂-, -CH₂CH₂CH₂- and -CH₂CH₂CH₂CH₂-.

10. The dispersant according to any of claims 1 to 9, wherein R¹⁵ is selected from the group consisting of -CH₂CH(OH)CH₂-O-CH₂CH(C₂H₅)CH₂CH₂CH₂CH₃, -CH₂-phenyl and - CH₂CH₂CH₂-phenyl, wherein phenyl is unsubstituted or substituted by 1, 2 or 3 substituents selected from the group consisting of chloride, bromide, hydroxy, NO₂ and methoxy.

11. A process for preparing a dispersant according to any of claims 1 to 10 comprising
i. mixing a compound of formula R¹¹R¹²N-R¹³-NH₂ with a lactone monomer of formula (II), 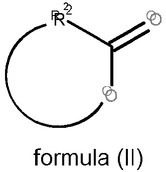 or a polyester homopolymer or copolymer obtainable from the lactone monomer of formula (II) to obtain a reaction mixture, wherein R², R¹¹, R¹² and R¹³ are as defined as in any of claims 1 to 13;
ii. heating the reaction mixture as obtained in step i. at a temperature in the range of 70 to 150 °C to obtain a homogeneous mixture; and
iii. heating the homogeneous mixture as obtained in step ii. at a temperature in the range of 100 to 300 °C to obtain the dispersant of formula (I).

12. A process for preparing the dispersant according to any of claims 1 to 10 comprising
a. heating a hydroxyalkyl acrylate of formula CH₂=CH-C(=O)-O-R¹⁴-OH with a 5- or 6-membered N-containing heterocycle of formula YH at a temperature in the range of 30 to 100 °C to obtain a resultant mixture, wherein Y and R¹⁴ is defined as in any of claims 1 to 13; and
b. adding the lactone monomer of formula (II) 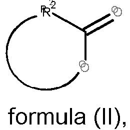 wherein R² is defined as in any of claims 1 to 13,
or a polyester homopolymer or copolymer obtainable from the lactone monomer of formula (II) to the resultant mixture as obtained in step a. to obtain a reaction mixture;
c. heating the reaction mixture as obtained in step b. at a temperature in the range of 70 to 150 °C to obtain a homogeneous mixture; and
d. heating the homogeneous mixture as obtained in step c. at a temperature in the range of 100 to 300 °C to obtain the dispersant of formula (I).

13. The process according to claim 11 or 12 further comprising a step of quaternizing the dispersant obtained in step (iii) or step (d) by heating a mixture comprising the dispersant and an alkylating agent at a temperature in the range of 50 to 150 °C.

14. A liquid composition in the form of a dispersion comprising the dispersant according to any of claims 1 to 10, a particulate solid material selected from the group consisting of pigments and fillers, and a liquid diluent.

15. Use of the dispersant according to any of claims 1 to 10 as a component of a coating composition or an ink composition.

## Patentansprüche

1. Ein Dispergiermittel der Formel (I),
T-(A)ₘ-L-Z Formel (I),
wobei T Wasserstoff oder R₁-C(=O)- ist,
R¹ ist ein substituiertes oder unsubstituiertes, lineares oder verzweigtes C₁-C₂₄ Alkyl;
A ist, gleich oder verschieden, eine Oxyalkylencarbonyl-Einheit der Formel -O-R²-C(=O)-,
R² is -(CH₂)₅-, -(CH₂)₄- or -(CH₂)₃-;
m ist eine ganze Zahl im Bereich von 3 bis 50;
L steht für eine Gruppe ausgewählt aus der Gruppe bestehend aus -O- und -NH-;
Z ist eine stickstoffhaltige Gruppe ausgewählt aus der Gruppe bestehend aus Z₁, Z₂ und Z₃;
wobei Z₁ R¹¹R¹²N-R¹³- ist, Z₂ Y-R¹⁴- ist und Z₃ Y-CH₂-CH₂-C(=O)-OR¹⁴- ist
R¹¹ und R¹² sind unabhängig voneinander ausgewählt aus Wasserstoff und substituiertem oder unsubstituiertem, linearem oder verzweigtem C₁-C₁₂-Alkyl, das gleich oder verschieden sein kann, oder R¹¹ und R¹² bilden zusammen
mit dem Stickstoff, an den sie gebunden sind, einen 3- bis 12-gliedrigen Ring, der 1 bis 3 Heteroatome umfasst,
R¹³ ist ein substituiertes oder unsubstituiertes, lineares oder verzweigtes C₁-C₁₂-Alkylen;
Y ist ein 5- oder 6-gliedriger N-haltiger Heterocyclus, der 1 oder 2 Stickstoffatome umfasst und der zusätzlich ein Sauerstoffatom umfassen kann,
R¹⁴ ist ein substituiertes oder unsubstituiertes, lineares oder verzweigtes C₁-C₁₂-Alkylen;
oder Z ist ein quaternäres Ammoniumsalz, ableitbar von der stickstoffhaltigen Gruppe ausgewählt aus der Gruppe bestehend aus Z₁, Z₂ und Z₃; wobei der quaternäre Stickstoff an R¹⁵ und ein Anion x⁻ gebunden ist,
R¹⁵ ist ausgewählt aus der Gruppe bestehend aus Wasserstoff, einem substituierten oder unsubstituierten, linearen oder verzweigten C₁-C₂₄-Alkyl, einem substituierten oder unsubstituierten C₄-C₁₀-Cycloalkyl, einem substituierten oder
unsubstituierten C₆-C₁₈-Aryl und substituiertem oder unsubstituiertem, verzweigtem oder unverzweigtem C₇-C₁₈ Arylalkyl; wobei das C₁-C₂₄ Alkyl optional durch -O- unterbrochen ist; und
x⁻ ist ausgewählt aus der Gruppe bestehend aus Cl, Br, I, Acetat und Benzoat;
wobei Z eine stickstoffhaltige Gruppe ist, ausgewählt aus der Gruppe bestehend aus Z₁, Z₂ und Z₃ und das Dispergiermittel eine Aminzahl von 30 bis 100 mg KOH/g aufweist, bestimmt gemäß DIN 53176:2002-11; und
wobei Z ein quaternäres Ammoniumsalz ist und das Dispergiermittel eine Aminzahl von 2 bis 12 mg KOH/g aufweist, bestimmt gemäß DIN 53176:2002-11.

2. Das Dispergiermittel nach Anspruch 1, wobei R¹ ausgewählt ist aus der Gruppe bestehend aus CH₃(CH₂)₃-, CH₃(CH₂)₁₀- und CH₃(CH₂)₁₆-.

3. Das Dispergiermittel nach Anspruch 1 oder 2, wobei m eine ganze Zahl im Bereich von 2 bis 20 ist.

4. Das Dispergiermittel nach einem der Ansprüche 1 bis 3, wobei (A)ₘ (A¹)_{M1}(A²)_{M2} ist, wobei A¹ und A² voneinander verschieden sind und ausgewählt sind aus der Gruppe bestehend aus - O-(CH₂)₅-C(=O)-, -O-(CH₂)₄-C(=O)- und -O-(CH₂)₃-C(=O)-; und
M1 und M2 sind, gleich oder verschieden, eine ganze Zahl im Bereich von 1 bis 40, und das Verhältnis von M1 und M2 liegt im Bereich von 10:1 bis 1:10.

5. Das Dispergiermittel nach einem der Ansprüche 1 bis 4, wobei (A)ₘ (-O-(CH₂)₆-C(=O)-)_{M1}(-O-(CH₂)₄-C(=O)-)_{M2} ist, wobei M1 und M2, gleich oder verschieden, eine ganze Zahl im Bereich von 1 bis 40 sind und das Verhältnis von M1 und M2 im Bereich von 10:1 bis 1:10 liegt.

6. Das Dispergiermittel nach einem der Ansprüche 1 bis 5, wobei R¹¹ und R¹² unabhängig voneinander unsubstituiertes, lineares oder verzweigtes C₁-C₈-Alkyl sind und R¹³ unsubstituiertes, lineares oder verzweigtes C₁-C₈-Alkylen ist.

7. Das Dispergiermittel nach einem der Ansprüche 1 bis 6, wobei R¹¹ Methyl ist, R¹² Methyl ist und R¹³ -CH₂CH₂CH₂- ist.

8. Das Dispergiermittel nach einem der Ansprüche 1 bis 7, wobei Y ausgewählt ist aus der Gruppe bestehend aus Imidazolyl, Morpholinyl und Piperidinyl.

9. Das Dispergiermittel nach einem der Ansprüche 1 bis 8, wobei R¹⁴ ausgewählt ist aus der Gruppe bestehend aus -CH₂-, -CH₂CH₂-, -CH₂CH₂CH₂- und -CH₂CH₂CH₂CH₂-.

10. Das Dispergiermittel nach einem der Ansprüche 1 bis 9, wobei R¹⁵ ausgewählt ist aus der Gruppe bestehend aus -CH₂CH(OH)CH₂-O-CH₂CH(C₂H₅)CH₂CH₂CH₂CH₃, -CH₂-Phenyl und - CH₂CH₂CH₂-Phenyl, wobei Phenyl unsubstituiert oder durch 1, 2 oder 3 Substituenten substituiert ist, ausgewählt aus der Gruppe bestehend aus Chlorid, Bromid, Hydroxy, NO₂ und Methoxy.

11. Ein Verfahren zur Herstellung eines Dispergiermittels nach einem der Ansprüche 1 bis 10, umfassend
i. Mischen einer Verbindung der Formel R¹¹R¹²N-R¹³-NH₂ mit einem Lactonmonomer der Formel (II), 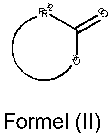 oder einem Polyesterhomopolymer oder -copolymer, erhältlich aus dem Lactonmonomer der Formel (II), um ein Reaktionsgemisch zu erhalten, wobei R², R¹¹, R¹² und R¹³ wie in einem der Ansprüche 1 bis 13 definiert sind;
ii. Erhitzen des in Schritt i. erhaltenen Reaktionsgemisches auf eine Temperatur im Bereich von 70 bis 150 °C, um ein homogenes Gemisch zu erhalten; und
iii. Erhitzen des in Schritt ii. erhaltenen homogenen Gemisches auf eine Temperatur im Bereich von 100 bis 300 °C, um das Dispergiermittel der Formel (I) zu erhalten.

12. Ein Verfahren zur Herstellung des Dispergiermittels nach einem der Ansprüche 1 bis 10, umfassend
a. Erhitzen eines Hydroxyalkylacrylats der Formel CH₂=CH-C(=O)-O-R¹⁴-OH mit einem 5- oder 6-gliedrigen N-haltigen Heterocyclus der Formel YH auf eine Temperatur im Bereich von 30 bis 100 °C, um ein resultierendes Gemisch zu erhalten, wobei Y und R₁₄ wie in einem der Ansprüche 1 bis 13 definiert sind; und
b. Zugabe des Lactonmonomers der Formel (II) 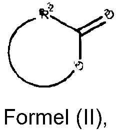 wobei R² wie in einem der Ansprüche 1 bis 13 definiert ist,
oder eines Polyesterhomopolymers oder -copolymers, erhältlich aus dem Lactonmonomer der Formel (II), zu dem in Schritt a. erhaltenen resultierenden Gemisch, um ein Reaktionsgemisch zu erhalten;
c. Erhitzen des in Schritt b. erhaltenen Reaktionsgemisches auf eine Temperatur im Bereich von 70 bis 150 °C, um ein homogenes Gemisch zu erhalten; und
d. Erhitzen des in Schritt c. erhaltenen homogenen Gemisches auf eine Temperatur im Bereich von 100 bis 300 °C, um das Dispergiermittel der Formel (I) zu erhalten.

13. Das Verfahren nach Anspruch 11 oder 12, ferner umfassend einen Schritt der Quaternisierung des in Schritt (iii) oder Schritt (d) erhaltenen Dispergiermittels durch Erhitzen eines Gemisches, das das Dispergiermittel und ein Alkylierungsmittel umfasst, auf eine Temperatur im Bereich von 50 bis 150 °C.

14. Eine flüssige Zusammensetzung in Form einer Dispersion, umfassend das Dispergiermittel nach einem der Ansprüche 1 bis 10, ein partikelförmiges Feststoffmaterial ausgewählt aus der Gruppe bestehend aus Pigmenten und Füllstoffen, sowie ein flüssiges Verdünnungsmittel.

15. Verwendung des Dispergiermittels nach einem der Ansprüche 1 bis 10 als Bestandteil einer Beschichtungszusammensetzung oder einer Tintenzusammensetzung.

## Revendications

1. Un dispersant de formule (I),
T-(A)ₘ-L-Z formule (I),
dans laquelle T est hydrogène ou R¹-C(=O)-,
R¹ est un alkyle C₁-C₂₄ linéaire ou ramifié, substitué ou non substitué ;
A est, identique ou différent, une unité oxyalkylènecarbonyle de formule -O-R²-C(=O)-,
R² is -(CH₂)₅-, -(CH₂)₄- or -(CH₂)₃-;
m est un entier compris entre 3 et 50 ;
L représente un groupe choisi dans le groupe constitué de -O- et -NH- ;
Z est un groupe contenant de l'azote choisi dans le groupe constitué de Z₁, Z₂ et Z₃ ; dans lequel Z₁ R¹¹R¹²N-R¹³-, Z₂ est Y-R¹⁴-, et Z₃ est Y-CH₂-CH₂-C(=O)-OR¹⁴-
R¹¹ et R¹² sont indépendamment choisis parmi hydrogène et alkyle C₁-C₁₂ linéaire ou ramifié, substitué ou non substitué, qui peuvent être identiques ou différents, ou R¹¹ et R¹² ensemble avec l'azote auquel ils sont attachés forment un cycle de 3- à 12-membres comprenant 1 à 3 hétéroatomes,
R¹³ est un alkylène C₁-C₁₂ linéaire ou ramifié, substitué ou non substitué ;
Y est un hétérocycle contenant N à 5- ou 6- membres qui comprend 1 ou 2 atomes d'azote et qui peut comprendre en outre un atome d'oxygène,
R¹⁴ est un alkylène C₁-C₁₂ linéaire ou ramifié, substitué ou non substitué ;
ou Z est un sel d'ammonium quaternaire dérivable du groupe contenant de l'azote choisi
dans le groupe constitué de Z₁, Z₂ et Z₃ ; dans lequel l'azote quaternaire est attaché à R¹⁵ et à un anion x⁻,
R¹⁵ est choisi dans le groupe constitué de hydrogène, un alkyle C₁-C₂₄ linéaire ou ramifié, substitué ou non substitué, un cycloalkyle C₄-C₁₀ substitué ou non substitué, un aryle substitué ou non substitué C₆-C₁₈, et un arylalkyle C₇-C₁₈ ramifié ou non ramifié, substitué ou non substitué ; dans lequel l'alkyle C₁-C₂₄ est éventuellement interrompu par -O- ; et
x⁻ est choisi dans le groupe constitué de Cl, Br, I, acétate et benzoate ;
dans lequel Z est un groupe contenant de l'azote choisi dans le groupe constitué de Z₁, Z₂ et Z₃ et le dispersant a un indice d'amine de 30 à 100 mg KOH/g, déterminé conformément à la norme DIN 53176:2002-11 ; et
dans lequel Z est un sel d'ammonium quaternaire et le dispersant a un indice d'amine de 2 à 12 mg KOH/g, déterminé conformément à la norme DIN 53176:2002-11.

2. Le dispersant selon la revendication 1, dans lequel R₁ est choisi dans le groupe constitué de CH₃(CH₂)₃-, CH₃(CH₂)₁₀-, et CH₃(CH₂)₁₆-.

3. Le dispersant selon la revendication 1 ou 2, dans lequel m est un entier compris entre 2 et 20.

4. Le dispersant selon l'une quelconque des revendications 1 à 3, dans lequel (A)ₘ est (A¹)_{M1}(A²)_{M2}, dans lequel A¹ et A² sont différents l'un de l'autre et choisis dans le groupe constitué de -O-(CH₂)₅-C(=O)-, -O-(CH₂)₄-C(=O)- et -O-(CH₂)₃-C(=O)- ; et
M1 et M2 sont, identiques ou différents, un entier compris entre 1 et 40, et le rapport de M1 et M2 est compris entre 10:1 et 1:10.

5. Le dispersant selon l'une quelconque des revendications 1 à 4, dans lequel (A)ₘ est (-O-(CH₂)₅-C(=O)-)_{M1}(-O-(CH₂)₄-C(=O)-)_{M2}, dans lequel M₁ et M₂ sont, identiques ou différents, un entier compris entre 1 et 40, et le rapport de M₁ et M₂ est compris entre 10:1 et 1:10.

6. Le dispersant selon l'une quelconque des revendications 1 à 5, dans lequel R¹¹ et R¹² sont indépendamment un alkyle C₁-C₈ linéaire ou ramifié non substitué, et R¹³ est un alkylène C₁-C₈ linéaire ou ramifié non substitué.

7. Le dispersant selon l'une quelconque des revendications 1 à 6, dans lequel R¹¹ est méthyle, R¹² est méthyle et R¹³ est -CH₂CH₂CH₂-.

8. Le dispersant selon l'une quelconque des revendications 1 à 7, dans lequel Y est choisi dans le groupe constitué d'imidazolyle, morpholinyle et pipéridinyle.

9. Le dispersant selon l'une quelconque des revendications 1 à 8, dans lequel R¹⁴ est choisi dans le groupe constitué de -CH₂-, -CH₂CH₂-, -CH₂CH₂CH₂- et - CH₂CH₂CH₂CH₂-.

10. Le dispersant selon l'une quelconque des revendications 1 à 9, dans lequel R¹⁵ est choisi dans le groupe constitué de -CH₂CH(OH)CH₂-O-CH₂CH(C₂H₅)CH₂CH₂CH₂CH₃, -CH₂-phényle et -CH₂CH₂CH₂-phényle, dans lequel phényle est non substitué ou substitué par 1, 2 ou 3 substituants choisis dans le groupe constitué de chlorure, bromure, hydroxy, NO₂ et méthoxy.

11. Un procédé de préparation d'un dispersant selon l'une quelconque des revendications 1 à 10 comprenant
i. le mélange d'un composé de formule R₁₁R₁₂N-R₁₃-NH₂ avec un monomère lactone de formule (II), 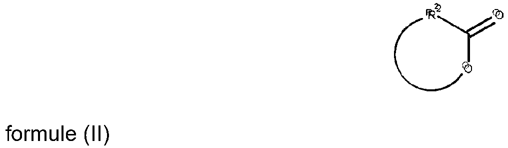 ou un homopolymère ou copolymère polyester pouvant être obtenu à partir du monomère lactone de formule (II) pour obtenir un mélange réactionnel, dans lequel R², R¹¹, R¹² et R¹³ sont tels que définis dans l'une quelconque des revendications 1 à 13 ;
ii. le chauffage du mélange réactionnel obtenu à l'étape i. à une température comprise entre 70 et 150 °C pour obtenir un mélange homogène ; et
iii. le chauffage du mélange homogène obtenu à l'étape ii. à une température comprise entre 100 et 300 °C pour obtenir le dispersant de formule (I).

12. Un procédé de préparation du dispersant selon l'une quelconque des revendications 1 à 10 comprenant
a. le chauffage d'un hydroxyalkyle acrylate de formule CH₂=CH-C(=O)-O-R¹⁴-OH avec un hétérocycle contenant N à 5- ou 6- membres de formule YH à une température comprise entre 30
et 100 °C pour obtenir un mélange résultant, dans lequel Y et R₁₄ sont définis comme dans l'une quelconque des revendications 1 à 13 ; et
b. l'ajout du monomère lactone de formule (II) 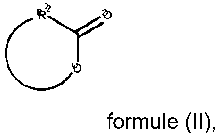 dans laquelle R² est défini comme dans l'une quelconque des revendications 1 à 13,
ou un homopolymère ou copolymère polyester pouvant être obtenu à partir du monomère lactone de formule (II) au mélange résultant obtenu à l'étape a. pour obtenir un mélange réactionnel ;
c. le chauffage du mélange réactionnel obtenu à l'étape b. à une température comprise entre 70 et 150 °C pour obtenir un mélange homogène ; et
d. le chauffage du mélange homogène obtenu à l'étape c. à une température comprise entre 100 et 300 °C pour obtenir le dispersant de formule (I).

13. Le procédé selon la revendication 11 ou 12 comprenant en outre une étape de quaternisation du dispersant obtenu à l'étape (iii) ou à l'étape (d) par chauffage d'un mélange comprenant le dispersant et un agent alkylant à une température comprise entre 50 et 150 °C.

14. Une composition liquide sous forme de dispersion comprenant le dispersant selon l'une quelconque des revendications 1 à 10, un matériau solide particulaire choisi dans le groupe constitué de pigments et de charges, et un diluant liquide.

15. Utilisation du dispersant selon l'une quelconque des revendications 1 à 10 en tant que composant d'une composition de revêtement ou d'une composition d'encre.
